(19) Europäisches Patentamt
European Patent Office
Office européen des brevets

(11) **EP 1 236 249 B1**

(12) **EUROPEAN PATENT SPECIFICATION**

(45) Date of publication and mention
of the grant of the patent:
**25.04.2007 Bulletin 2007/17**

(51) Int Cl.:
**H01S 3/06** *(2006.01)*     **H01S 3/098** *(2006.01)*

(21) Application number: **00977340.9**

(22) Date of filing: **07.12.2000**

(86) International application number:
**PCT/CH2000/000649**

(87) International publication number:
**WO 2001/043242 (14.06.2001 Gazette 2001/24)**

(54) **MODE-LOCKED THIN-DISK LASER**

MODENGEKOPPELTER DÜNNER SCHEIBENLASER

LASER A DISQUE FIN A MODES BLOQUES

(84) Designated Contracting States:
**AT BE CH CY DE DK ES FI FR GB GR IE IT LI LU MC NL PT SE TR**

(30) Priority: **08.12.1999 US 456338**
**17.03.2000 US 528788**

(43) Date of publication of application:
**04.09.2002 Bulletin 2002/36**

(73) Proprietor: **Time-Bandwidth Products AG**
**8005 Zürich (CH)**

(72) Inventors:
- **PASCHOTTA, Rüdiger**
  **CH-8049 Zürich (CH)**
- **AUS DER AU, Jürg**
  **CH-8052 Zürich (CH)**
- **SPÜHLER, Gabriel, J.**
  **CH-8008 Zürich (CH)**
- **KELLER, Ursula**
  **CH-8049 Zürich (CH)**

(74) Representative: **Frei, Alexandra Sarah**
**Frei Patentanwaltsbüro**
**Postfach 1771**
**8032 Zürich (CH)**

(56) References cited:
**WO-A-96/36906**     **DE-A- 19 907 722**

- **AUS DER AU J ET AL: "16.2-W average power from a diode-pumped femtosecond Yb:YAG thin disk laser" OPTICS LETTERS, 1 JUNE 2000, OPT. SOC. AMERICA, USA, vol. 25, no. 11, pages 859-861, XP002161727 ISSN: 0146-9592**
- **BRAUN B ET AL: "PASSIVELY Q-SWITCHED 180-PS ND:LASC3(BO)4 MICROCHIP LASER" OPTICS LETTERS,US,OPTICAL SOCIETY OF AMERICA, WASHINGTON, vol. 21, no. 6, 15 March 1996 (1996-03-15), pages 405-407, XP000587034 ISSN: 0146-9592**
- **GIESEN A ET AL: "SCALABLE CONCEPT FOR DIODE-PUMPED HIGH-POWER SOLID-STATE LASERS" APPLIED PHYSICS B: LASERS AND OPTICS,DE,SPRINGER INTERNATIONAL, BERLIN, vol. B58, no. 5, 1 May 1994 (1994-05-01), pages 365-372, XP000452026 ISSN: 0946-2171 cited in the application**

Remarks:
The file contains technical information submitted after the application was filed and not included in this specification

## Description

FIELD OF THE INVENTION

This invention relates to lasers and, more particularly, to mode-locked thin-disk lasers (also called active-mirror lasers) and to methods for generating pulsed laser radiation. The invention also relates to an apparatus for emitting pulsed electromagnetic radiation.

BACKGROUND OF THE INVENTION

Conventional solid-state lasers comprise a rod made of a solid-state laser gain material. The laser rod typically has the geometry of a cylinder, its longitudinal dimension (length) being larger than its transverse dimension (diameter). The laser gain material is optically excited (pumped) by light, e.g., from laser diodes, impinging in transverse direction upon the cylindrical surface or in longitudinal direction upon the end faces. The laser radiation is emitted in longitudinal direction and recirculated in a resonator cavity.

The laser rod must be cooled in order to avoid damage caused by heat absorbed from the pump light, especially in high-power lasers. In the conventional solid-state lasers described above, dissipated power is removed in transverse direction from the cylindrical surface of the laser rod. e.g., by a cooling liquid. Such transverse cooling leads to a transverse temperature gradient inside the laser rod, i.e., the temperature in the middle (on or near the axis) of the rod is significantly higher than on the surface of the rod. Due to the temperature dependence of the refractive index and to thermally induced mechanical stress, the refractive index of the gain material also varies in transverse direction and is generally higher in the middle of the rod. This results in "thermal lensing" or thermally induced birefringence which can cause a very detrimental degradation of the laser beam quality and efficiency losses.

In order to overcome the problem of thermal lensing, a concept called "thin-disk laser" or "active-mirror laser" has been proposed (cf. U.S. patent No. 5,553,088 by Brauch et al., "Laser Amplifying System"; A. Giesen et al., "Scalable Concept for Diode-Pumped High-Power Solid-State Lasers", Appl. Phys. B 58, 365-372, 1994; T. Kasamatsu and H. Sekita, "Laser-diode-pumped Nd:YAG active-mirror laser", Appl. Opt., Vol. 36, No. 9, 1879-1881, 1997. The basic idea of this approach is a very thin laser-crystal disk, one surface of which is longitudinally pumped by laser diodes, whereas the other surface is mounted on a heat sink. If the thickness of the disk is smaller than the laser beam diameter, one obtains a nearly one-dimensional heat flow to the cooled surface. Therefore, a uniform pump intensity distribution can generate a temperature profile which is uniform in the transverse direction, which minimizes thermal-lensing effects. Nearly complete pump absorption can be achieved despite the small thickness of the disk by arranging multiple passes of the pump radiation through the disk, using appropriate pump optics. In continuous-wave (cw) operation, this concept has allowed to generate as much as 100 W output power in a diffraction-limited beam (M. Karszewski et al., "100 W $TEM_{00}$ operation of Yb:YAG thin disk laser with high efficiency", Conference on Advanced Solid-State Lasers, OSA Technical Digest Series (Optical Society of America, Washington D.C., 1998), p. 296, 1998), more than has been achieved with other laser concepts.

Lasers emitting short or ultrashort (in the sub-picosecond range) pulses are known in the art. A well-known technique for short or ultrashort pulse generation is mode locking. Mode locking is a coherent superposition of longitudinal laser-cavity modes. It is forced by a temporal loss modulation which reduces the intracavity losses for a pulse within each cavity-roundtrip time. This results in an open net gain window, in which pulses only experience gain if they pass the modulator at a given time. The loss modulation can be formed either actively or passively. Active mode locking is achieved, for instance, using an acousto-optic modulator as an intracavity element, which is synchronized to the cavity-roundtrip time. However, ultra-short-pulse generation relies on passive mode-locking techniques, because only a passive shutter is fast enough to shape and stabilize ultrashort pulses. Passive mode locking relies on a saturable absorber mechanism, which produces decreasing loss with increasing optical intensity. When the saturable-absorber parameters are correctly adjusted for the laser system, stable and self-starting mode locking is obtained.

Ultra-short passively mode-locked solid-state lasers often use Kerr-lens mode locking (KLM) (cf. U.S. patent No. 5,163.059 by Negus et al., "Mode-locked Laser Using Non-linear Self-focusing Element". In KLM. self-focusing of the laser beam due to the Kerr effect combined with either a hard aperture or a "soft" gain aperture produces a self amplitude modulation. Passive mode locking can also be achieved with semiconductor saturable absorber mirrors (SESAMs) (cf. U. Keller et al., "Semiconductor saturable absorber mirrors (SESAMs) for femtosecond to nanosecond pulse generation in solid-state lasers", Journal of Selected Topics in Quantum Electronics (JSTQE), Vol. 2, No. 3, 435-453, 1996, incorporated herein by reference). A SESAM is a nonlinear mirror inserted inside the laser cavity. Its reflectivity is higher at higher light intensities due to absorption bleaching obtained by using semiconductors as the nonlinear material. A SESAM typically consists of a bottom mirror, the saturable absorber structure and, optionally, an additional antireflection or reflecting coating on the top surface.

To date, mainly continuous-wave (cw) or Q-switched thin-disk lasers have been reported, although lasers emitting short or ultrashort pulses are important tools in a wide variety of applications in physics, chemistry, biology and medicine. German patent application No. 199 07 722 discloses a thin-disk laser mode locked by a Kerr-lens mode-locking mechanism, but points out that a SESAM would be unsuitable for a high-power thin-disk laser. There are mainly two problems which arise when one tries to insert a passive mode-locking device, especially a SESAM, into a thin-disk laser.

The first problem are Q-switching instabilities. An unwanted tendency for Q-switched mode locking (QML) is introduced by a saturable absorber in the laser cavity. This results from the fact that e.g. some increase of the intracavity pulse energy over the stationary value (caused maybe by a pump fluctuation) leads to stronger bleaching of the absorber and thus an increased net gain, which in effect causes an exponential growth of the pulse energy. This growth is suppressed if gain saturation limits the pulse energy in time. Solid-state lasers materials (and Yb:YAG in particular) have low laser cross-sections and thus weak gain saturation effects, so that Q-switching instabilities are often difficult to avoid. We have made a detailed investigation of this problem and found a number of counter-measures (C. Hönninger et al.. "Q-switching stability limits of cw passive mode locking". J. Opt. Soc. Am. B 16, 46, 1999), which we also applied to the mode-locked Yb:YAG laser as described in this document.

The second problem is possible damage of the saturable absorber. This can be caused either by over-heating, or by non-thermal effects at high optical intensities, particularly if Q-switching instabilities lead to the generation of high-energy pulses. These damage problems can be critical in passively mode-locked high-power lasers, but in this document we show that they can be solved for thin-disk Yb:YAG lasers and do not prevent scaling to very high average powers.

SUMMARY OF THE INVENTION

It is therefore an object of this invention to provide a thin-disk laser which can be passively mode locked. The laser shall have a good beam quality (e.g., emit the fundamental $TEM_{00}$ mode), a high efficiency (e.g., 25 % or more), and emit short pulses (in the picosecond range or shorter) with a high average power (e.g., 10 W and higher) and/or high pulse energy (e.g., 0.5 $\mu$J or more). It is a further object of this invention to provide a method for generating short-pulsed laser radiation with a high average power, a good beam quality and a high efficiency. It is still a further object to provide an apparatus for emitting pulsed electromagnetic radiation.

The laser for emitting pulsed electromagnetic radiation according to the invention is defined in claim 1.

The method for generating pulsed laser radiation according to the invention is defined in claim 22.

The laser according to the invention uses the thin-disk laser concept with its longitudinal cooling geometry. This has the advantage that thermal-lensing effects are reduced or suppressed. The absorption of the pump radiation can be made efficient by performing multiple passes of the pump radiation in the disk. In order to avoid reflections which could affect the mode-locking process, the disk is preferably wedge-shaped.

The thin disk is preferably made of Yb:YAG: this laser gain material offers a very good efficiency of typically 50 % and allows the generation of very short pulses with durations even below 1 ps. Other possible laser gain materials are. e.g., Nd:YAG, Nd:YVO$_4$ (neodymium vanadate), or semiconductors.

A preferred embodiment of the laser according to the invention comprises a SESAM as the passive mode-locking means. A SESAM is a compact and simple device for mode locking, and allows for very short pulses. SESAM stands here for any other saturable absorber structures, which have sometimes been termed A-FPSA (Opt. Lett. 17, 505, 1992), SBR (Opt. Lett. 20, 1406, 1995, D-SAM (Opt. Lett. 21, 486, 1996), semiconductor doped dielectric layers (Opt. Lett. 23, 1766, 1998), or colored glass filters (Appl. Phys. Lett. 57, 229, (1990), for example. Any other saturable absorbers could be used which allow to adjust the operation parameters for stable mode locking (cf. C. Hönninger et al., "Q-switching stability limits of cw passive mode locking". J. Opt. Soc. Am. B 16, 46, 1999).

However, a saturable absorber in the laser cavity introduces an unwanted tendency for Q-switched mode locking (QML). The tendency for QML can be reduced by one or several of the following measures:

(a) high average intensity (= average power per mode area, e.g., 40 kW/cm$^2$), i.e., a high average power and/or a small mode area, in the laser gain medium;

(b) low repetition rate (e.g., lower than 50 MHz, preferably about 30 MHz), i.e., a long resonator cavity;

(c) strong saturation of the SESAM, i.e., an operation of the SESAM far above the saturation fluence

$$F_{sat} \quad E_{A,sat}/A_{SESAM} \quad ,$$

where $E_{A,sat}$ is the saturation energy of the SESAM and $A_{SESAM}$ is the mode area on the SESAM (However, a strong saturation of the SESAM increases the risk of SESAM damage as well as a tendency for the laser to generate multiple circulating pulses, rather than a single pulse per round-trip time. One therefore preferably limits the ratio of the intracavity pulse energy to $E_{A,sat}$ to values smaller than 10, although higher values may be possible.);

(d) soliton mode locking, i.e., an operation with negative dispersion, which at the same time helps to achieve shorter pulses. (In C. Hönninger et al., "Q-switching stability limits of cw passive mode locking", J. Opt. Soc. Am. B 16, 46, 1999, it is explained how the interplay of soliton effects and gain filtering helps to suppress Q-switching instabilities.)

It should be noted that a suitably designed thin disk laser head (with a small laser-mode size in the gain medium) strongly reduces the QML tendency via measure (a), so that a strong SESAM saturation (measure (c)) is not necessarily required.

According to the invention, the problem of possible thermal SESAM damage is eliminated based on the fact that heating depends on the absorbed intensity, not power. This is because the thickness of the SESAM is smaller than the laser-mode area on the device. The thermal load on the SESAM can be reduced by using a "low-finesse" design with a low saturation fluence $F_{sat}$, which allows to use a larger mode area. Typical saturation fluences which do not cause any damages are in the range of 100 $\mu$J/cm$^2$. Non-thermal SESAM damage is avoided by not operating the SESAM far above the critical saturation fluence.

A passively mode-locked thin-disk laser may also be deliberately operated in the Q-switched mode-locked regime, where the maximum achieved pulse energy is considerably increased. For this purpose, a SESAM with higher modulation depth is used, or possibly a combination of several SESAMs (e.g., to distribute the heat load). Another possibility is to incorporate a Pockels cell and polarizing optics for cavity dumping. This allows to extract pulses with energies which are only slightly lower than the intracavity pulse energy, which can be very high in a mode-locked thin-disk laser.

Such a laser is not part of the invention as claimed.

The laser according to the invention offers the important advantage of power scalability. The output power can be varied by a factor q (e.g., q = 2 for doubling the output power) by multiplying the pump power as well as the mode areas on the thin disk and the SESAM by the same factor q. (It is well-known to the person skilled in the art how to design and construct laser cavities with suitable laser-mode sizes.) By following this scaling rule, the tendencies for thermal lensing, Q-switching instabilities and SESAM damage (thermal or non-thermal) do not increase, but remain approximately constant. In other words, the problems do not grow when scaling up power. The temperature excursion in the laser disk is not increased because the pump intensity remains unchanged. Residual transverse thermal gradients in the laser disk are reduced by scaling up the mode area, which just compensates the higher sensitivity of larger laser modes to lensing effects. The temperature excursion on the SESAM is not increased again because it is determined by the absorbed intensity which remains unchanged. Finally the tendency to Q-switching instabilities is not increased by the power scaling as described (for details see C. Hönninger et al., "Q-switching stability limits of cw passive mode locking", J. Opt. Soc. Am. B 16, 46, 1999). Consequently, the invention makes possible very high average powers (of 100 W and more), combined with good beam quality, high efficiency and short pulse durations.

In addition to a saturable absorber, Kerr lens mode locking (KLM) may be applied in the laser according to the invention. In order to achieve even shorter pulse durations and self-starting mode locking, preferably both mode-locking techniques could be used in combination. The Kerr effect, e.g., in a glass plate or in the laser gain medium, is strong for high intracavity powers, which are achievable by the power scaling explained above.

Preferably, a glass plate (or a similar transparent medium) placed in the resonator cavity at an angle near the Brewster angle with respect to the laser-beam axis is used to enforce a linear polarization of the laser radiation. The same plate or another plate at a different location in the resonator cavity can be used as a nonlinear (Kerr) medium to exploit the effect of Kerr lens mode locking instead of or in addition to the action of the saturable absorber.

In the laser according to the invention, measures for introducing negative dispersion or dispersion compensation are preferably taken. Examples for dispersion-compensating means to be inserted into a laser-resonator cavity are:

- a Gires-Tournois interferometer (GTI) (cf. F. Gires, P. Tournois, "Interferomètre utilisable pour la compression d'impulsions lumineuses modulées en fréquence". C. R. Acad. Sci. Paris, Vol. 258, 6112-6115. 1964);
- a pair of diffraction gratings (cf. E. B. Treacy, "Optical Pulse Compression with Diffraction Gratings, IEEE J. Quantum Electron., Vol. 5, 454-458, 1969);
- a pair of prisms (cf. R. L. fork et al., "Negative dispersion using pairs of prisms". Optics Letters, Vol. 9, 150-152, 1984);
- a chirped mirror (P. Laporta and V. Magni, "Dispersive effects in the reflection of femtosecond optical pulses from broadband dielectric mirrors", Applied Optics, Vol. 24, 2014-2020, 1985; R. Szipöcs et al., Opt. Lett. 19, 201. 1994; F. X. Kärtner et al., Opt. Lett. 22. 831, 1997), or another type of dispersive mirrors.

In the following, the effect of spatial hole burning (SHB) in the laser according to the invention is discussed. Because the laser gain medium is extremely thin in a thin-disk laser, the standing-wave pattern in the gain medium is wiped out only for a relatively large emission bandwidth. This has two consequences, a rather negative and a rather positive one:

- If the laser is set up for the generation of relatively long pulses (of a few picoseconds in the case of a thin laser disk wich a thickness of about 0.2 mm), the standing-wave pattern is not wiped out and in homogeneous gain saturation deforms the gain spectrum. This favors a tendency for the generation of multiple pulses, which is a usually unwanted (because less stable) regime of operation.

- If the pulses are shorter (about 0.5-1 ps), SHB somewhat flattens the gain spectrum. This effect allows for the generation of shorter pulses because the effective gain spectrum is broadened. The best effect is achieved if the thickness of the gain medium is approximately equal to the velocity of light in the gain medium, divided by two times the desired bandwidth of the pulses, which itself can be roughly a third of the gain bandwidth of the laser medium. (For soliton pulses, this effectively means that within the time of the pulse duration the pulse can propagate through about twice the thickness of the gain medium.) Indeed, this condition was approximately fulfilled in first experiments, and a pulse duration below 700 fs was achieved, which would probably be difficult to achieve without the support by the mentioned effect.

If the generation of longer pulses is desired, the above-mentioned instability caused by SHB can be removed or substantially reduced as follows. The laser cavity is designed such that the laser beam hits the thin-disk gain medium not only twice but four times during each round-trip in the standing-wave cavity. Two bounces are made with a certain angle with respect to normal incidence, and the other two bounces with a slightly different angle. The difference of angles has the effect that the periods of the induced standing-wave patterns in the gain medium are different. The angles of incidence should be chosen such that the resulting standing-wave pattern is largely smeared out near the side of the crystal opposite to the one with the reflective coating. Near the other side of the crystal there will still be a standing-wave pattern of significant contrast, but there is no more any undepleted inversion which could be utilized by any wave with a frequency within the amplification bandwidth of the material. Therefore, the above-mentioned instability does not occur even if the lasing bandwidth is quite small, i.e., if quite long pulses are generated.

Thus, the range of accessible pulse durations is extended and pulse duration tuning is made possible.

For a more quantitative description of the setup for reducing SHB-caused instabilities, note that for a single wave in the gain medium the period of the induced gain grating is

$$\lambda/(2n \ \cos\alpha) \ , \qquad\qquad (1)$$

where $\lambda$ is the vacuum wavelength, $n$ is the refractive index of the crystal, and $\alpha$ is the angle (in the crystal) relative to normal incidence. The above-mentioned condition means that the number of periods within one crystal thickness differs by 0.5 between the two waves:

$$[2nd \ (\cos\alpha_1 - \cos\alpha_2)]/\lambda = 0.5 \ , \qquad\qquad (2)$$

where $\alpha_1$ and $\alpha_2$ are the two different angles of incidence occuring for different bounces, and $d$ is the thickness of the gain medium. As an example, we use the following numbers: $d = 0.22$ mm, $n = 1.82$, $\lambda = 1030$ nm, $\alpha_1 = 1°$. We then meet the condition (2) for $\alpha_2 = 2.3°$. The optimum may actually be to use a slightly larger value (e.g., $\alpha_2 = 2.6°$) so that perfect elimination of the standing-wave pattern occurs not at the crystal surface but somewhat more inside the crystal. The exact values of the angles $\alpha_1$, $\alpha_2$ are not critical. SHB-caused instabilities can also be reduced using other values on the right-hand side of Eq. (2) such as 1.5, 2.5,..., and generally values with which the standing-wave pattern is largely smeared out.

In order to reduce SHB-caused instabilities, even more than four bounces of the laser beam on the thin-disk gain medium with at least two different angles of incidence are possible. This could lead to an even better smearing out of the standing-wave pattern.

A disadvantage of the described setup for reducing SHB-caused instabilities is that the laser beam experiences the effect of the thermal lens four times rather than two times per round-trip. On the other hand, the thermal lens can be rather weak in a thin-disk laser head, and the doubled gain may be used to either lower the laser threshold or (with increased output coupler transmission) reduce the intracavity laser intensity.

The laser according to the invention is particularly well suited as a pump source for devices which do nonlinear frequency conversion, such as frequency doublers, sum frequency mixers, synchronously pumped optical parametric oscillators (OPOs), optical parametric amplifiers (OPAs), or optical parametric generators (OPGs). For example, OPOs allow to generate powerful femtosecond pulses at different wavelengths and with good wavelength tunability. An OPO potentially yields much shorter (e.g., 10-20 times shorter) pulses than the pump pulses. This may lead to pulsed sources with several tens of Watts of average power and less than 100 fs pulse duration. Optical parametric generators need quite high pump pulse energies, which can be provided by a laser according to the invention without further amplification, so that the extension of such a laser with a single nonlinear crystal for parametric generation can provide an efficient and powerful pulsed source which can possibly be tuned in a wide wavelength range. To reduce the necessary parametric gain and/or to narrow the optical spectrum of the generated output, an optical seed source may be used, effectively operating the crystal as an OPA.

An OPO consists of a similar cavity as a laser resonator cavity, but the gain in the OPO is generated in a nonlinear crystal (e.g., made of LBO or KTA) which is pumped with the pulses from the thin-disk laser. The nonlinear crystal of the OPO generates a signal wave, for which the OPO cavity is resonant, and a corresponding idler wave. (Alternatively, the OPO cavity may be resonant for the idler wave.) The circulating signal pulses are synchronized with the pump pulses. The wavelengths of signal and idler waves are determined by phase matching, which depends on the refractive indices of the nonlinear crystal, i.e., on the material, its temperature and the propagation directions. It has been shown (L. Lefort et al., Opt. Lett. 24 (1), 28. 1999) that the pulses generated by an synchronously pumped OPO can be more than 10 times shorter than the pump pulses. Thus the combination of a passively mode-locked thin-disk laser according to the invention and a synchronously pumped OPO is a way towards the generation of pulses with more than 10 W average power and durations far below 1 ps, with the additional advantages of broad tunability and diode pumping. Other laser sources which could serve as OPO pump sources with similar specifications are presently not known.

In particular, the laser according to the invention can be combined with an OPO and a frequency doubler, a sum frequency mixer, an optical parametric generator (OPG) or an optical parametric amplifier (OPA). Such an apparatus could be used for generating high-power pulsed red, green and blue light, e.g., for color displays.

All the mentioned devices for nonlinear wavelength or frequency conversion of the output of the laser according to the invention require that phase matching in the nonlinear crystal is achieved in some way. (For a frequency doubling crystal, for example, phase matching means that the phase velocities of pump wave and second-harmonic wave are made identical.) There are two basic ways to achieve phase matching, called critical and noncritical phase matching, respectively:

(i) "Critical phase matching" means that one operates the nonlinear crystal at a fixed temperature, e.g., at room temperature, and adjusts the propagation angle of the beams in the crystal with respect to the principal axes of the crystal so that phase matching is obtained. (The necessary propagation angle can be calculated by a person skilled in the art.) Because the tolerance for the propagation angle is typically quite small, the beam divergence in the nonlinear crystal must be small, which prevents one from strongly focussing the beams in the crystal.

(ii) "Noncritical phase matching" means that the propagation direction is chosen so that the propagation angle is far less important: this is obtained, e.g., for propagation along one of the principal axes of the crystal. Phase matching is then achieved by controlling the temperature of the crystal, which is for this purpose, e.g., mounted in a temperature-controlled oven. The beam divergence can then be strong, so that strong focussing of the beams in the crystal can be used.

For noncritical phase matching, much higher peak powers are required to obtain good efficiency of the nonlinear process, because the beams can not be strongly focussed, as explained above. Noncritical phase matching is then often the only option. The laser according to the invention, however, allows to generate very high peak powers, because of the high average power and also the much shorter pulse duration (< 1 ps) compared to typical high-power mode-locked lasers (> 10 ps) known from the state of the art. Indeed the experiments with the laser according to the invention already resulted in well over 50 % conversion efficiency in a critically phase-matched LBO crystal for second-harmonic generation at room temperature, generating green light with as much as 8 W of average power. (For laser pulses with. e.g.. 10 ps duration and the same average power (15 W), the conversion efficiency for this process in LBO would be expected to be in the order of 10 % only.) This shows that the laser according to the invention is very suitable as a pump source for efficient nonlinear wavelength converters based on critical phase matching (rather than noncritical phase matching). The main advantage of this is that the nonlinear crystal can be operated at constant temperature (possibly not even requiring active temperature control), which is particularly important for tunable parametric devices (e.g., optical parametric oscillators or optical parametric generators) because very fast tuning of the output wavelengths in wide ranges is then possible by changing the propagation angle in the nonlinear crystal rather than the crystal temperature, which inherently needs much more time to be changed.

BRIEF DESCRIPTION OF THE DRAWINGS

Figure 1 is a schematic top plan view of a preferred embodiment of a laser according to the invention:

Figure 2 is a schematic cross-section through a thin-disk laser gain medium mounted on a heat sink used in a preferred embodiment of the laser according to the invention;

Figure 3 is a schematic cross-section through a semiconductor saturable absorber mirror used in a preferred embodiment of the laser according to the invention;

Figure 4 is a graphical representation of the autocorrelation function versus time for an Yb:YAG laser according to the invention;

Figure 5 is a graphical representation of the optical spectrum versus the optical wavelength for the measurement of Fig. 4;

Figure 6 is a schematic top plan view of an apparatus for optical frequency conversion according to the invention ;

Figure 7 is a schematic top plan view of an embodiment of a laser according to the invention wherein SHB-caused instabilities are reduced; and

Figure 8 is schematic top plan view of another embodiment of a laser according to the invention wherein SHB-caused instabilities are reduced.

DESCRIPTION OF THE PREFERRED EMBODIMENTS

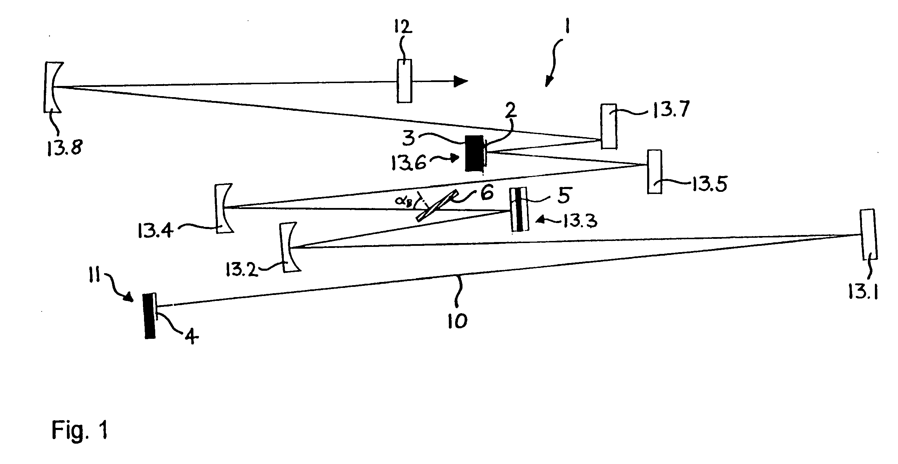

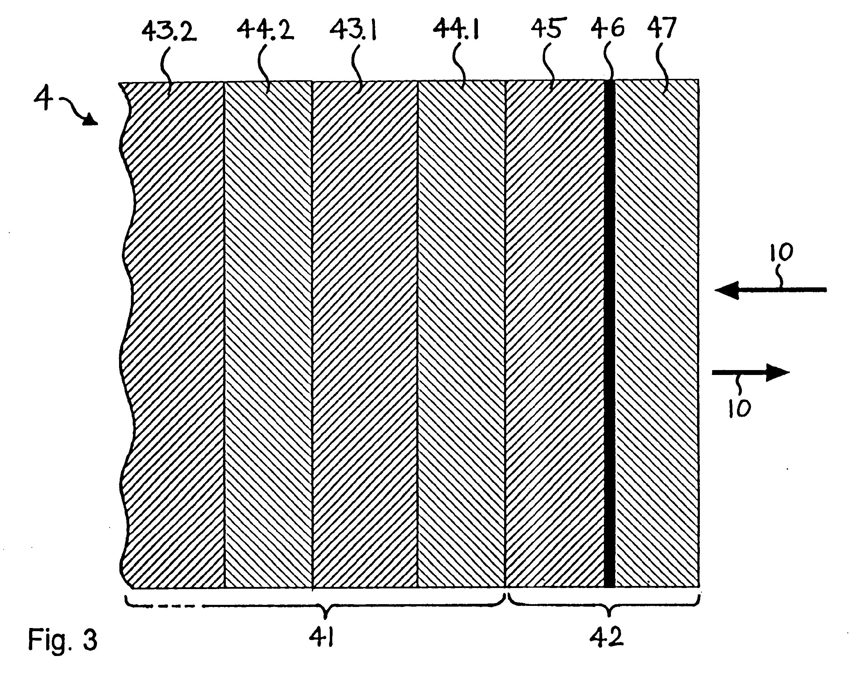

**Figure 1** shows a schematic, simplified illustration of a laser according to the invention. The laser comprises an optical resonator 1 delimited by a first reflective element 11 and a second reflective element 12 for reflecting laser radiation 10. In the preferred embodiment of Fig. 1. the first reflective element 11 is a semiconductor saturable absorber mirror (SESAM) device 4 for passively mode locking the laser; it is described below with reference to Fig. 3. In other embodiments, the first reflective element 11 could be, e.g., a dielectric mirror. The second reflective element 12 may be, e.g., a partially reflecting outcoupling dielectric and/or metallic mirror.

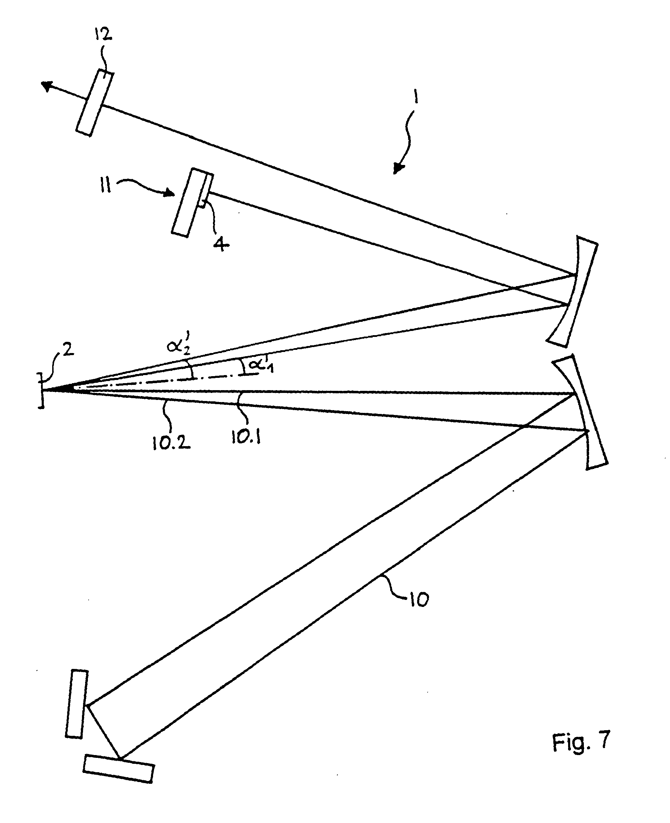

The resonator 1 shown in Fig. 1 is multiply folded by several folding mirrors 13.1-13.8. Their radii are, e.g., the following: $R_1 = R_3 = R_5 = R_6 = R_7 = \infty$; $R_2 = R_8 = 1.5$ m; $R_4 = 1$ m. The total length of the geometric path in the resonator 1 in this example is 10 m, corresponding to a repetition rate of 15 MHz. The lengths of the portions between the folding mirrors 13.1-13.8 may be calculated by comparison with Fig. 1 since Fig. 1 shows the lengths of the portions in a correct scale. Of course, many other laser resonator designs are possible for the laser according to the invention (cf. Fig. 7).

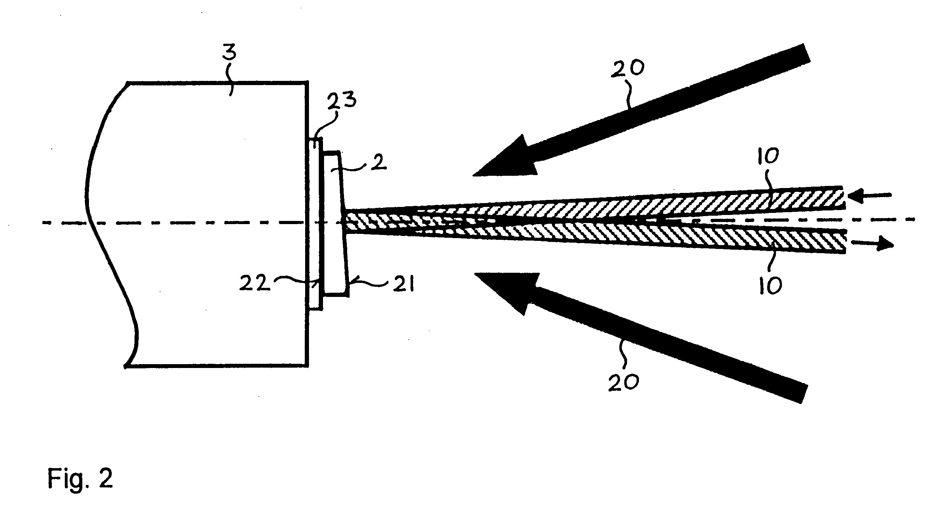

A thin-disk laser head comprising a thin-disk solid-state laser gain medium 2 mounted on cooling means 3 is placed inside the optical resonator 1. The thin-disk laser head simultaneously acts as a folding mirror 13.6 and is described below with reference to Fig. 2. Alternatively, the thin-disk laser head could be used as an end mirror 11 in the resonator cavity 1. For reasons of clarity, means for exciting the laser gain medium 2 are not drawn in Fig. 1 and are discussed with reference to Fig. 2.

The laser of Fig. 1 still further comprises a Gires-Tournois interferometer (GTI) 5 as a dispersion-compensating means. The GTI 5 simultaneously acts as a folding mirror 13.3. An optional glass plate 6 is placed inside the optical resonator 1 and oriented such that the angle of incidence of the laser beam 10 is equal to the Brewster angle $\alpha_B$ in order to obtain a linear polarization of the laser beam 10. The glass plate 6 could simultaneously be used for Kerr lens mode locking (KLM). Alternatively, the Kerr effect needed for KLM could be provided by an additional plate, by the laser gain medium 2 or by the GTI 5.

**Figure 2** shows a schematic cross-section through a thin-disk laser head usable for a preferred embodiment of the laser according to the invention. A laser gain medium 2 has the shape of a thin disk and is preferably an Yb:YAG crystal with a thickness of about 0.2 mm. The thin disk 2 is mounted via a rear surface 22 on a cooling element 3, e.g.,

a water-cooled copper element. Between the thin disk 2 and the cooling element 3, there may be an indium foil 23 for mounting the thin disk 2 on the cooling element 3, for ensuring a good thermal contact between the thin disk 2 and the cooling element 3, and for enhancing the reflectivity of the rear surface 22. In order to avoid reflections which could affect the mode-locking process, the thin disk 2 is preferably slightly wedge-shaped. (For reasons of clarity, the wedge shape is strongly exaggerated in Fig. 2; typical wedge angles are about 0.1°.) The laser gain medium 2 is preferably optically pumped by light 20 emitted, e.g., by a laser diode (not drawn) and impinging on a front surface 21 of the thin disk 2. The front surface 21 of the thin disk 2 is preferably provided with an antireflection (AR) coating, the rear surface 22 with a high-reflection (HR) coating. A laser beam 10 impinging under a small angle of incidence on the front surface 21 of the thin disk 2 is amplified and reflected by the thin disk 2. In an other embodiment, where the thin disk 2 is used as an end mirror 11 in the resonator cavity 1, the angle of incidence could be zero (normal incidence).

**Figure 3** shows a schematic cross-section through a SESAM 4 used in a preferred embodiment of the laser according to the invention. A laser beam which is reflected by the SESAM 4 is sketched as an arrow 10. The SESAM 4 consists of a bottom mirror 41 and a saturable absorber structure 42. The bottom mirror 41 is typically a Bragg mirror, i.e., a stack of. e.g., 50 semiconductor and/or dielectric quarter-wave layers 43.1. 43.2, ..., 44.1, 44.2, ... on a substrate (not shown), wherein low-refractive-index layers 43.1, 43.2.... and high-refractive-index layers 44.1, 44.2, ... alternate with each other. The quarter-wave layers of the bottom mirror 41 consist of, e.g., AlAs 43.1, 43.2, ... (n = 2.94 at $\lambda$ = 1030 nm) and GaAs (n = 3.50 at $\lambda$ = 1030 nm) 44.1, 44.2, ... The saturable absorber structure 42 comprises a first ALAs structure 45 with a thickness of 85 nm, an InGaA.s absorber layer 46 with a thickness of 8 nm, and a GaAs spacer layer 47 with a thickness of 71 nm. Of course, a person skilled in the art is able to design other SESAMs 4.

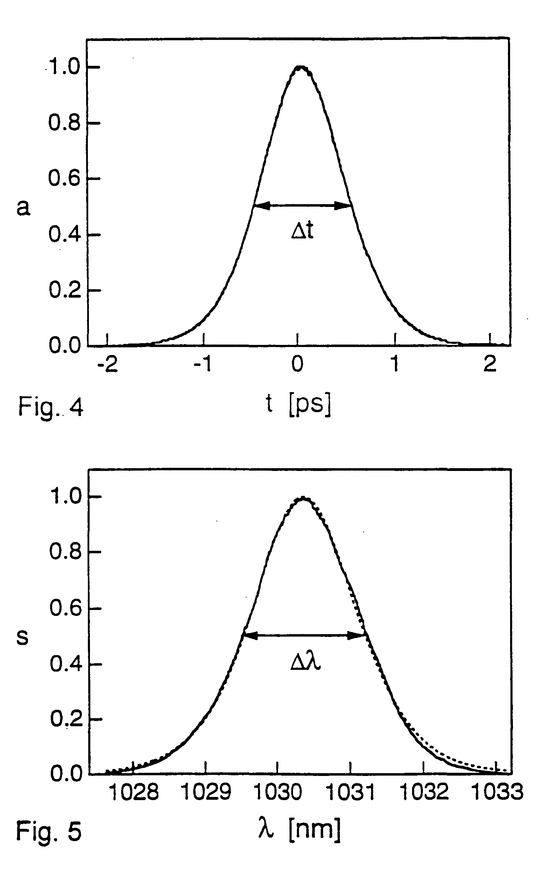

Some experimental characteristics of the laser of Fig. 1 with a laser gain medium 2 as in Fig. 2 and a semiconductor saturable absorber mirror 4 as in Figure 3 are presented in **Figures 4 and 5**. The autocorrelation a and the optical spectrum s, respectively, are drawn in full lines; the dashed lines are corresponding fits for soliton pulses. From the autocorrelation a. the pulse width can be determined: the pulse width is the full width at half maximum times a correction factor which depends on the form of the curve. For the autocorrelation a of Figure 4, the correction factor is 0.648, and we obtain a pulse width of 680 fs. The optical spectrum s, shown in Figure 5, indicates that the average output wavelength is 1030.3 nm.

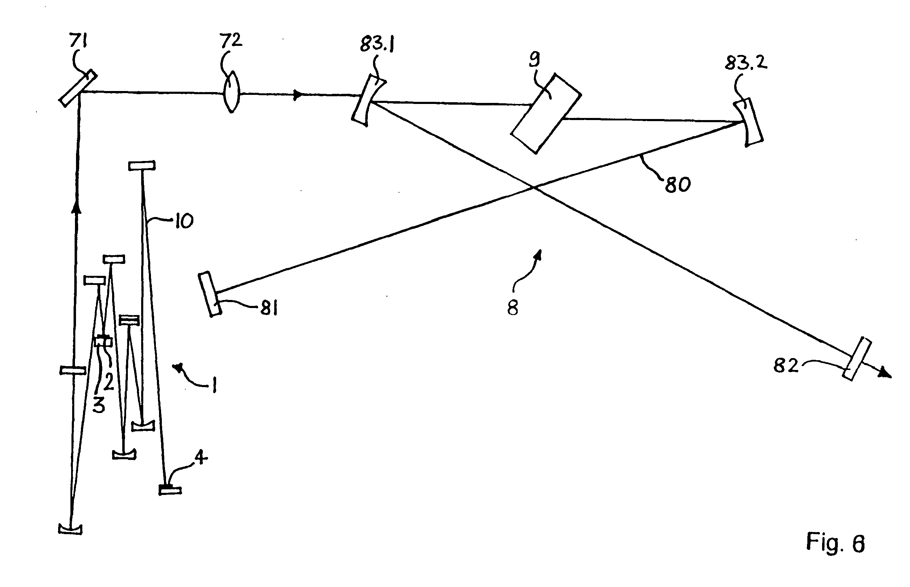

**Figure 6** shows a schematic, simplified illustration of an apparatus for optical frequency conversion according to the invention. It comprises a thin-disk laser according to the invention (left-hand side of Fig. 6) and a synchronously pumped optical parametric oscillator (OPO; right-hand side of Fig. 6). The thin-disk laser may be, e.g., the one shown in Fig. 1, with a resonator cavity 1 comprising a thin-disk gain medium 2 mounted on a cooling element 3, and a SESAM 4. An exemplified embodiment of an OPO cavity 8 is delimited by a first reflective element 81 and a second reflective element 82, and is folded by two, e.g., curved, folding mirrors 83.1, 83.2. An optically nonlinear element 9, e.g.. an LBO crystal, is placed inside the OPO cavity 8. Phase matching is achieved either by adjusting the propagation angle of the beams in the crystal, or by controlling the crystal temperature, e.g., with an oven (not shown). The nonlinear element 9 emits a signal wave with a signal wavelength of, e.g., 1900 nm, and an idler wave with an idler wavelength of, e.g., 2250 nm; the common path of both signal and idler wave is referenced by the number 80. The mirrors 81 and 83.1, 83.2 have a high reflectivity for the signal wave and a low reflectivity for the idler wave. The second reflective element 82 is partially reflective (e.g., R = 90 %) for the signal wave and has a low reflectivity for the idler wave. The path length in the OPO resonator cavity 8 is the same as in the laser resonator cavity 1, e.g., 10 m. The laser radiation is incoupled into the OPO resonator cavity 8 by means of, e.g., a mirror 71 and a lens 72. Of course, many other OPO resonator designs are possible for the apparatus according to the invention.

**Figure 7** is a schematic top plan view of an embodiment of a laser according to the invention wherein SHB-caused instabilities are eliminated or substantially reduced. This embodiment is especially well suited for the generation of longer pulses. The reduction of instabilities is achieved by a design of the laser resonator 1 wherein the laser beam 10 hits the thin-disk gain medium 2 not only twice (as, e.g., in the embodiment of Fig. 1) but four times during each round-trip in the standing-wave resonator. Two bounces 10.1 are made with a first angle $\alpha_1$' with respect to normal incidence (e.g., $\alpha_1$' = 1.8°), and the other two bounces 10.2 with a second angle $\alpha_2$' (e.g., $\alpha_2$' = 4.2°) which is slightly different from the first angle $\alpha_1$'. The difference of angles has the effect that the periods of the induced standing-wave patterns in the gain medium 2 are different. (It should be noted that the angles $\alpha_1$' and $\alpha_2$' in Fig. 7 are the angles of incidence in air and are thus not identical with the angles $\alpha_1$ and $\alpha_2$ in Eq. (2) which are the angles of incidence in the laser gain medium 2. The angles $\alpha_1$ and $\alpha_1$' or the angles $\alpha_2$ and $\alpha_2$', respectively, are related by Snell's law of refraction.)

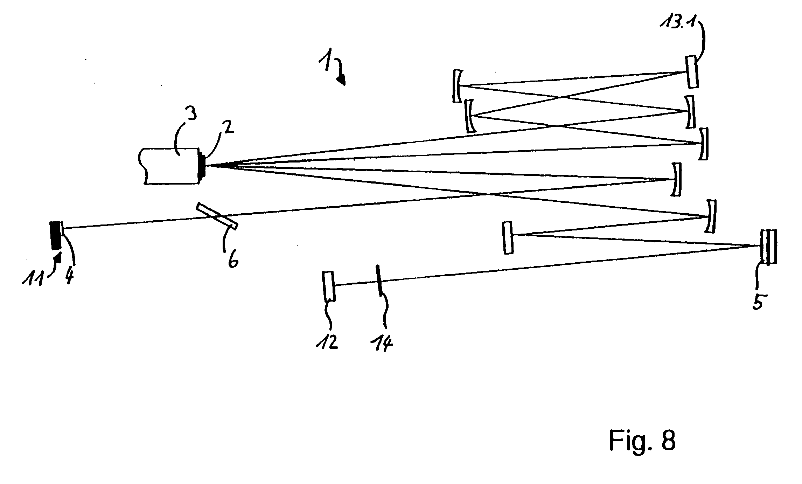

A more detailed schematic top view of a set up which allows pulse duration tuning is shown in Figure 8. The laser resonator 1 is again designed such that the laser beam 10 hits the thin-disk gain medium four times during each round-trip in the standing-wave resonator. The resonator is designed such that it is largely symmetric with respect to the folding mirror 13.1. For this reason, the stability range of the cavity with respect to thermal lensing is as large as for a simple cavity comprising only one double pass through the disk per round trip. The Gires-Tournois interferometer (GTI) 5 serves as a dispersion-compensating means for soliton mode locking. The GTI here consists of a high reflector and a fused quartz plate (anti-reflection coated on one side) with a piezo-controlled air gap. The pulse duration, in this setup, can be tuned simply by varying the voltage of the piezo that controls this air gap. In this way, the pulse duration range can be expanded, e.g. to durations between 0,5 ps and 100 ps, or, as experimentally demonstrated, to durations between 3,3 ps and 89 ps in a setup with an etalon 14 or between 0,83 ps and 1.5 ps without an etalon. As a remark, the upper limit is e.g. not determined by SHB but by other factors such as the recovery time of the SESAM etc.

**Claims**

1. A passively mode-locked laser for emitting pulsed electromagnetic radiation, said laser comprising:

   an optical resonator (1);
   a solid-state laser gain medium (2) placed inside said optical resonator, said laser gain medium having two end faces (21, 22) and being in the shape of a thin plate or layer with two end faces, the extension of said end faces being greater than a thickness of said plate or layer measured essentially in a direction perpendicular to one of said end faces, and at least one of said end faces (22) comprising a cooling surface;
   means (3) for cooling said laser gain medium via said cooling surface;
   means for exciting said laser gain medium to emit electromagnetic radiation; and
   means for passive mode locking (4) comprising a saturable absorber placed inside said optical resonator.

2. The laser according to claim 1, wherein said laser gain medium (2), said saturable absorber (4) said optical resonator (1) and said means for exciting said laser gain medium are designed in a manner that Q-switched-mode-locked operation is suppressed.

3. The laser according to claim 1 or 2, wherein at least one of said end faces (21, 22) is provided with means for reflecting said emitted electromagnetic radiation.

4. The laser according to claim 3, wherein said reflecting means comprise a dielectric coating.

5. The laser according to any one of the preceding claims, wherein said laser gain medium (2) is selected from the group consisting of Yb:YAG, Nd:YAG, Nd:YVO$_4$, and a semiconductor material.

6. The laser according to any one of the preceding claims, wherein said laser gain medium (2) has a thickness such that the effect of spatial hole burning supports the generation of short pulses.

7. The laser according to any one of the preceding claims, wherein said optical resonator (1) is designed such that said emitted electromagnetic radiation hits said thin-disk gain medium twice during each round-trip in said optical resonator.

8. The laser according to any one of the preceding claims, wherein said optical resonator (1) is designed such that said emitted electromagnetic radiation hits said thin-disk gain medium more than two times during each round-trip in said optical resonator, whereby at least two hits with different angles of incidence occur such that a standing-wave pattern in said thin-disk gain medium (2) is at least partially smeared out.

9. The laser according to claim 1, wherein said saturable absorber is a semiconductor saturable absorber mirror device.

10. The laser according any one of claims 1 to 9, wherein said means for passive mode locking comprise means for Kerr lens mode locking.

11. The laser according to any one of the preceding claims, further comprising means for introducing negative dispersion or dispersion compensation placed inside said optical resonator.

12. The laser according to claim 11, wherein said dispersion-compensating means are a Gires-Tournois interferometer (5), a pair of diffraction gratings, a pair of prisms, or a dispersive mirror.

13. The laser according to claim 12, wherein said Gires-Tournois interferometer (5) comprises a piezo-controlled air gap.

14. The laser according to claim any one of the preceding claims, wherein said optical resonator (1) has a length such as to emit pulsed electromagnetic radiation at a repetition rate lower than 100 MHz, and preferably lower than 50 MHz.

15. The laser according to any one of the preceding claims, wherein said exciting means comprise an electromagnetic-radiation source.

16. The laser according to claim any one of the preceding claims, further comprising means for cavity dumping.

17. The laser according to claim 1 or any one of claims 3 to16, further comprising means for Q-switched mode locking.

18. An apparatus for emitting pulsed electromagnetic radiation, said apparatus comprising the laser according to any one of the preceding claims and means for an optically nonlinear frequency conversion of electromagnetic radiation emitted by said laser.

19. The apparatus according to claim 18, wherein said frequency-conversion means comprise a synchronously pumped optical parametric oscillator (OPO), a frequency doubler, a sum frequency mixer, an optical parametric generator (OPG), and/or an optical parametric amplifier (OPA).

20. The apparatus according to claim 19, wherein said frequency-conversion means comprise a synchronously pumped optical parametric oscillator (OPO) and a frequency doubler, a sum frequency mixer, an optical parametric generator (OPG) or an optical parametric amplifier (OPA), for generating pulsed red, green and blue light.

21. The apparatus according to any one of claims 18 to 20, wherein said means for an optically nonlinear frequency conversion comprise an optically nonlinear crystal (9) with defined principal axes, said apparatus further comprising means for adjusting the propagation angle of said laser radiation in said crystal with respect to said principal axes in order to obtain phase matching of the nonlinear conversion process.

22. A method for generating pulsed laser radiation, comprising the steps of:

> exciting a solid-state laser gain medium (2) to emit electromagnetic radiation, said laser gain medium having two end faces (21, 22), and being in the shape of a thin plate or layer with two end faces, the extension of said end faces being greater than a thickness of said plate or layer measured essentially in a direction perpendicular to one of said end faces, and at least one of said end faces comprising a cooling surface;
> cooling said laser gain medium via said cooling surface;
> recirculating said electromagnetic radiation in an optical resonator; and
> passively mode locking said electromagnetic radiation using a saturable absorber.

23. The method according to claim 22, wherein further Kerr lens mode locking is used for enhancing the mode locking effect.

24. The method according to claim 22 or 23, wherein negative dispersion is introduced to inside said optical resonator.

25. The method according to any one of claims 22 to 24, wherein pulsed electromagnetic radiation is emitted at a repetition rate lower than 100 MHz, and preferably lower than 50 MHz.

26. The method according to any one of claims 22 to 25, wherein said laser gain medium is excited by electromagnetic radiation.

27. The method according to any one of claims 22 to 26, wherein said electromagnetic radiation in said optical resonator is cavity dumped.

28. The method according to any one of claims 22 to 27, wherein the thickness of the gain medium (2) is chosen such that the effect of spatial hole burning supports the generation of short pulses.

29. The method according to any one of claims 22 to 28, wherein said emitted electromagnetic radiation hits said thin-disk gain medium twice during each round-trip in said optical resonator.

30. The method according to any one of claims 22 to 28, wherein said emitted electromagnetic radiation hits said thin-disk gain medium more than two times during each round-trip in said optical resonator, whereby at least two hits with different angles of incidence occur such that a standing-wave pattern in said thin-disk gain medium is at least partially smeared out.

31. The method according to any one of claims 22 to 30, wherein said electromagnetic radiation in said optical resonator is Q-switched mode locked, preferably by using a saturable absorber with a large modulation depth.

32. A method for generating pulsed electromagnetic radiation, said method comprising the steps for generating pulsed laser radiation according any one of claims 22 to 31, and further optically nonlinearly converting the frequency of said laser radiation.

33. The method according to claim 32, wherein the frequency of said laser radiation is converted by an optical parametric oscillator (OPO), a frequency doubler, a sum frequency mixer, an optical parametric generator (OPG), and/or an optical parametric amplifier (OPA).

34. The method according to claim 33, wherein said laser radiation is converted by an optical parametric oscillator (OPO) and by a frequency doubler, a sum frequency mixer, an optical parametric generator (OPG) or an optical parametric amplifier (OPA), and thus pulsed red, green and blue light is generated.

35. The method according to any one of claims 32 to 34, wherein the frequency is converted in an optically nonlinear crystal (9) with defined principal axes, and phase matching of the nonlinear conversion process is obtained by adjusting the propagation angle of said laser radiation in said crystal with respect to said principal axes.

36. A method for varying by a defined scaling factor the output power of the pulsed electromagnetic radiation generated according to the method of any one of the claims 22 to 35, comprising the steps of:

varying essentially by said scaling factor the power emitted by said exciting means;
varying essentially by said scaling factor the area illuminated by said electromagnetic radiation in said laser gain medium; and
varying essentially by said scaling factor the area illuminated by said electromagnetic radiation on said mode-locking means.


**Patentansprüche**

1. Ein passiv modengekoppelter Laser zum Ausstrahlen von gepulster elektromagnetischer Strahlung, wobei dieser Laser aufweist:

einen optischen Resonator (1);
ein Festkörper-Verstärkungsmedium (2), welches im optischen Resonator angeordnet ist, wobei dieses Laserverstärkungsmedium zwei Endflächen (21, 22) aufweist und die Form einer dünnen Platte oder Schicht mit zwei Endflächen hat, wobei des Weiteren die Ausdehnung dieser Endflächen grösser als eine in einer im Wesentlichen senkrecht zu einer von diesen Endflächen gemessenen Dicke dieser Platte oder Schicht ist und wobei mindestens eine von diesen Endflächen (22) eine Kühlfläche aufweist;
Mittel (3) zur Kühlung des Laserverstärkungsmediums durch diese Kühlfläche;
Mittel zum Anregen des Laserverstärkungsmediums zur Ausstrahlung von elektromagnetischer Strahlung; und
Mittel zur passiven Modenkoppelung (4), welches einen im optischen Resonator angeordneten sättigbaren Absorber aufweist.

2. Der Laser gemäss Anspruch 1, wobei das Laserverstärkungsmedium (2), der sättigbare Absorber (4), der optische Resonator (1) und das Mittel zum Anregen des Laserverstärkungsmediums auf eine solche Art und Weise ausgelegt sind, dass ein modengekoppelter gütegeschalteter Betrieb unterdrückt wird.

3. Der Laser gemäss Anspruch 1 oder 2, wobei mindestens eine von den Endflächen (21, 22) Mittel zum Reflektieren dieser elektromagnetischen Strahlung aufweist.

4. Der Laser gemäss Anspruch 3, wobei die Mittel zum Reflektieren eine dielektrische Beschichtung aufweisen.

5. Der Laser gemäss irgendeinem der vorhergehenden Ansprüche, wobei das Laserverstärkungsmedium (2) aus einer Gruppe bestehend aus Yb:YAG, Nd:YAG, Nd:YVO$_4$ und einem Halbleiterwerkstoff ausgewählt wird.

6. Der Laser gemäss irgendeinem der vorhergehenden Ansprüche, wobei das Laserverstärkungsmedium (2) eine solche Dicke aufweist, dass die Wirkung des räumlichen Lochbrennens die Erzeugung von kurzen Pulsen unterstützt.

7. Der Laser gemäss irgendeinem der vorhergehenden Ansprüche, wobei der optische Resonator (1) so ausgelegt ist, dass die ausgestrahlte elektromagnetische Strahlung während jedem Durchgang im optischen Resonator zweimal auf das Dünnscheiben-Verstärkungsmedium trifft.

8. Der Laser gemäss irgendeinem der vorhergehenden Ansprüche, wobei der optische Resonator (1) so ausgelegt ist, dass die ausgestrahlte elektromagnetische Strahlung während jedem Duirchgang im optischen Resonator mehr als zweimal auf das Dünnscheiben-Verstärkungsmedium trifft, wobei mindestens zwei Treffer mit verschiedenen Einfallswinkeln auf solche Weise stattfinden, dass ein stationäres Wellenmuster im Dünnscheiben-Verstärkungsmedium (2) mindestens teilweise ausgewischt wird.

9. Der Laser gemäss Anspruch 1, wobei der sättigbare Absorber eine sättigbare Halbleiter-Absorber-Spiegelvorrichtung ist.

10. Der Laser gemäss irgendeinem der Ansprüche 1 bis 9, wobei die Mittel für die passive Modenkoppelung Mittel für Kerr-Linsen-Modenkoppelung aufweisen.

11. Der Laser gemäss irgendeinem der vorhergehenden Ansprüche, des Weiteren aufweisend Mittel für das Erzeugen einer negativen Dispersion oder einer Dispersionskompensation, welche im optischen Resonator angeordnet sind.

12. Der Laser gemäss Anspruch 11, wobei diese Mittel zur Dispersionskompensation ein Gires-Tournois Interferometer (5) ein Beugungsgitterpaar, ein Prismenpaar oder ein dispersiver Spiegel sind.

13. Der Laser gemäss Anspruch 12, wobei das Gires-Tournois Interferometer (5) einen piezoelektrisch gesteuerten Luftspalt aufweist.

14. Der Laser gemäss irgendeinem der vorhergehenden Ansprüche, wobei der optische Resonator (1) eine solche Länge aufweist, dass er eine gepulste elektromagnetische Strahlung mit einer Pulsfrequenz von weniger als 100 MHz und vorzugsweise von weniger als 50 MHz ausstrahlt.

15. Der Laser gemäss irgendeinem der vorhergehenden Ansprüche, wobei das Anregungsmittel eine elektromagnetische Strahlungsquelle aufweist.

16. Der Laser gemäss irgendeinem der vorhergehenden Ansprüche, welcher des Weiteren Mittel zum ‚cavity dumping' aufweist.

17. Der Laser gemäss Anspruch 1 oder irgendeinem der Ansprüche 3 bis 16, welcher des Weiteren Mittel zur gütegeschalteten Modenkoppelung aufweist.

18. Eine Vorrichtung für die Ausstrahlung von gepulster elektromagnetischer Strahlung, wobei diese Vorrichtung den Laser gemäss irgendeinem der vorhergehenden Ansprüche sowie Mittel für eine optisch nicht-lineare Frequenzumwandlung der von diesem Laser ausgestrahlten elektromagnetischen Strahlung aufweist.

19. Die Vorrichtung gemäss Anspruch 18, wobei diese Frequenzumwandlungsmittel einen synchron gepumpten optischen parametrischen Oszillator (OPO), einen Frequenzverdoppler, einen Summenfrequenzmischer, einen optischen parametrischen Generator (OPG) und/oder einen optischen parametrischen Verstärker (OPA) aufweisen.

20. Die Vorrichtung gemäss Anspruch 19, wobei diese Frequenzumwandlungsmittel einen synchron gepumpten optischen parametrischen Oszillator (OPO) und einen Frequenzverdoppler, einen Summenfrequenzmischer, einen optischen parametrischen Generator (OPG) oder einen optischen parametrischen Verstärker (OPA) für die Erzeugung von gepulstem rotem, grünem und blauem Licht aufweisen.

21. Die Vorrichtung gemäss irgendeinem der Ansprüche 18 bis 20, wobei diese Mittel für eine optisch nicht-lineare Frequenzumwandlung einen optisch nicht-linearen Kristall (9) mit definierten Hauptachsen aufweisen, wobei des Weiteren diese Vorrichtung Mittel für die Einstellung des Ausbreitungswinkels der Laserstrahlung in diesem Kristall relativ zu diesen Hauptachsen aufweisen, um dadurch eine Phasenanpassung des nicht-linearen Umwandlungsvorganges zu erreichen.

**22.** Ein Verfahren für die Erzeugung gepulster Laserstrahlung, welches die Schritte aufweist:

der Anregung eines Laserverstärkungsmediums mit elektronischer Schaltung (2) zur Ausstrahlung elektromagnetischer Strahlung, wobei dieses Laserverstärkungsmedium zwei Endflächen (21, 22) aufweist und die Form einer dünnen Platte oder Schicht mit zwei Endflächen hat und wobei die Ausdehnung dieser Endflächen grösser als eine in einer im Wesentlichen senkrecht zu einer von diesen Endflächen gemessenen Dicke der Scheibe oder Schicht ist und wobei mindestens eine von diesen Endflächen eine Kühlflache aufweist;
des Kühlens des Laserverstärkungsmediums durch diese Kühlfläche;
der Rückleitung der elektromagnetischen Strahlung in einem optischen Resonator; und
der passiven Modenkoppelung dieser elektromagnetischen Strahlung durch die Verwendung eines sättigbaren Absorbers.

**23.** Das Verfahren gemäss Anspruch 22, wobei des Weiteren die Kerr-Linsen -Modenkoppelung zur Verbesserung der Wirkung der Modenkoppelung verwendet wird.

**24.** Das Verfahren gemäss Anspruch 22 oder 23, wobei eine negative Dispersion im Inneren des optischen Resonators eingeleitet wird.

**25.** Das Verfahren gemäss irgendeinem der Ansprüche 22 bis 24, wobei gepulste elektromagnetische Strahlung bei einer Pulsfrequenz von weniger als 100 MHz und vorzugsweise von weniger als 50 MHz ausgestrahlt wird.

**26.** Das Verfahren gemäss irgendeinem der Ansprüche 22 bis 25, wobei das Laserverstärkungsmedium durch eine elektromagnetische Strahlung angeregt wird.

**27.** Das Verfahren gemäss irgendeinem der Ansprüche 22 bis 26, wobei die elektromagnetische Strahlung im optischen Resonator mittels 'cavity dumping' weggeführt wird.

**28.** Das Verfahren gemäss irgendeinem der Ansprüche 22 bis 27, wobei die Dicke des Verstärkungsmediums (2) so gewählt wird, dass die Wirkung des räumlichen Lochbrennens die Erzeugung von kurzen Pulsen unterstützt.

**29.** Das Verfahren gemäss irgendeinem der Ansprüche 22 bis 28, wobei die ausgestrahlte elektromagnetische Strahlung während jedem Durchgang im optischen Resonator zweimal auf das Dünnscheiben-Verstärkungsmedium trifft.

**30.** Das Verfahren gemäss irgendeinem der Ansprüche 22 bis 28, wobei die ausgestrahlte elektromagnetische Strahlung während jedem Durchgang im optischen Resonator mehr als zweimal auf das Dünnscheiben-Verstärkungsmedium trifft, wobei mindestens zwei Treffer mit verschiedenen Einfallswinkeln auf solche Weise stattfinden, dass ein stationäres Wellenmuster im Dünnscheiben-Verstärkungsmedium (2) mindestens teilweise ausgewischt wird.

**31.** Das Verfahren gemäss irgendeinem der Ansprüche 22 bis 30, wobei die elektromagnetische Strahlung im optischen Resonator modengekoppelt gütegeschaltet ist, vorzugsweise durch die Verwendung eines sättigbaren Absorbers mit einer grossen Modulationstiefe.

**32.** Ein Verfahren zur Erzeugung von gepulster elektromagnetischer Strahlung, wobei dieses Verfahren die Schritte zum Erzeugen von gepulster elektromagnetischer Strahlung gemäss irgendeinem der Ansprüche 22 bis 31 aufweist, und des Weiteren den Schritt der optisch nicht-linearen Umwandlung der Frequenz dieser Laserstrahlung aufweist.

**33.** Das Verfahren gemäss Anspruch 32, wobei die Frequenz der Laserstrahlung durch einen optischen parametrischen Oszillator (OPO), einen Frequenzverdoppler, einen Summenfrequenzmischer, einen optischen parametrischen Generator (OPG) und/oder einen optischen parametrischen Verstärker (OPA) umgewandelt wird.

**34.** Das Verfahren gemäss Anspruch 33, wobei die Frequenz der elektromagnetischen Strahlung durch einen optischen parametrischen Oszillator (OPO) und durch einen Frequenzverdoppler, einen Summenfrequenzmischer, einen optischen parametrischen Generator (OPG) oder einen optischen parametrischen Verstärker (OPA) umgewandelt wird und auf diese Weise rotes, grünes und blaues Licht erzeugt wird.

**35.** Das Verfahren gemäss irgendeinem der Ansprüche 32 bis 34, wobei die Frequenz in einem optisch nicht-linearen Kristall (9) mit definierten Hauptachsen umgewandelt wird, und wobei die Phasenanpassung des nicht-linearen Umwandlungsvorganges durch Einstellung des Ausbreitungswinkels der Laserstrahlung in diesem Kristall relativ

EP 1 236 249 B1

zu diesen Hauptachsen erreicht wird.

36. Ein Verfahren, um die Ausgangsleistung der gepulsten elektromagnetischen Strahlung, welche gemäss dem Verfahren der Ansprüche 22 bis 35 erzeugt wird, um einen definierten Skalierungsfaktor zu variieren, welches die Schritte aufweist:

des im Wesentlichen um diesen Skalierungsfaktor Variierens der Leistung, welche durch das Anregungsmittel abgegeben wird;
des im Wesentlichen um diesen Skalierungsfaktor Variierens des Bereiches, welcher durch die elektromagnetische Strahlung im Laserverstärkungsmedium angestrahlt wird; und
des im Wesentlichen um diesen Skalierungsfaktor Variierens des Bereiches, welcher durch die elektromagnetische Strahlung auf dem Mittel zur Modenkoppelung angestrahlt wird.

**Revendications**

1. Laser verrouillé passivement en mode pour émettre un rayonnement électromagnétique pulsé, ledit laser comprenant :

une cavité optique (1),
un milieu solide (2) amplificateur laser placé à l'intérieur de ladite cavité optique, ledit milieu amplificateur laser présentant deux surfaces d'extrémité (21, 22) et présentant la forme d'une mince plaque ou d'une mince couche dotée de deux surfaces d'extrémité, l'extension desdites surfaces d'extrémité étant plus grande que l'épaisseur de ladite plaque ou de ladite couche mesurée essentiellement dans une direction perpendiculaire à l'une desdites surfaces d'extrémité, au moins l'une desdites surfaces d'extrémité (22) comprenant une surface de refroidissement,
un moyen (3) qui refroidit ledit milieu d'amplificateur laser par l'intermédiaire de ladite surface de refroidissement,
un moyen qui excite ledit milieu amplificateur laser pour qu'il émette un rayonnement électromagnétique et
un moyen (4) de verrouillage passif du mode, qui comprend un absorbeur saturable placé à l'intérieur de ladite cavité optique.

2. Laser selon la revendication 1, dans lequel ledit milieu (2) amplificateur laser, ledit absorbeur saturable (4), ladite cavité optique (1) et ledit moyen d'excitation dudit milieu amplificateur laser sont conçus de manière à empêcher un fonctionnement en mode verrouillé à commutation Q.

3. Laser selon les revendications 1 ou 2, dans lequel au moins l'une desdites surfaces d'extrémité (21, 22) est dotée d'un moyen qui réfléchit ledit rayonnement électromagnétique émis.

4. Laser selon la revendication 3, dans lequel ledit moyen réfléchissant comprend un revêtement diélectrique.

5. Laser selon l'une quelconque des revendications précédentes, dans lequel ledit milieu (2) amplificateur laser est sélectionné dans l'ensemble constitué de Yb:UAG, Nd:YAG, Nd:YVO$_4$ et un matériau semi-conducteur.

6. Laser selon l'une quelconque des revendications précédentes, dans lequel ledit milieu (2) amplificateur laser a une épaisseur telle que l'effet du brûlage spatial des trous assiste la création de courtes impulsions.

7. Laser selon l'une quelconque des revendications précédentes, dans lequel ladite cavité optique (1) est conçue de telle sorte que ledit rayonnement électromagnétique émis vienne frapper ledit milieu amplificateur en disque mince deux fois pendant chaque recirculation dans ladite cavité optique.

8. Laser selon l'une quelconque des revendications précédentes, dans lequel ladite cavité optique (1) est conçue de telle sorte que ledit rayonnement électromagnétique émis vienne frapper ledit milieu amplificateur en disque mince plus de deux fois pendant chaque recirculation dans ladite cavité optique, de telle sorte qu'au moins deux frappes sous différents angles d'incidence aient lieu de manière à effacer au moins en partie un motif d'onde stationnaire dans ledit milieu (2) amplificateur en disque mince.

9. Laser selon la revendication 1, dans lequel ledit absorbeur saturable est un dispositif semi-conducteur de miroir d'absorbeur saturable.

**10.** Laser selon l'une quelconque des revendications 1 à 9, dans lequel ledit moyen de verrouillage passif en mode comprend un moyen de verrouillage en mode à lentille de Kerr.

**11.** Laser selon l'une quelconque des revendications précédentes, qui comprend en outre à l'intérieur de ladite cavité optique un moyen pour amener une dispersion négative ou une compensation de la dispersion.

**12.** Laser selon la revendication 11, dans lequel ledit moyen de compensation de la dispersion est un interféromètre de Gires-Tournois (5), une paire de grilles de diffraction, une paire de prismes ou un miroir dispersif.

**13.** Laser selon la revendication 12, dans lequel ledit interféromètre de Gires-Tournois (5) comprend un interstice d'air contrôlé par des moyens piézo-électriques.

**14.** Laser selon l'une quelconque des revendications précédentes, dans lequel ledit résonateur optique (1) a une longueur telle qu'il émet un rayonnement électromagnétique pulsé à une cadence de répétition inférieure à 100 MHz et de préférence inférieure à 50 MHz.

**15.** Laser selon l'une quelconque des revendications précédentes, dans lequel ledit moyen d'excitation comprend une source de rayonnement électromagnétique.

**16.** Laser selon l'une quelconque des revendications précédentes, qui comprend en outre un moyen de déchargement de la cavité.

**17.** Laser selon la revendication 1 ou l'une quelconque des revendications 3 à 16, qui comprend en outre un moyen de verrouillage de mode à commutation Q.

**18.** Appareil qui émet un rayonnement électromagnétique pulsé, ledit appareil comprend le laser selon l'une quelconque des revendications précédentes et un moyen de conversion optique non linéaire de la fréquence du rayonnement électromagnétique émis par ledit laser.

**19.** Appareil selon la revendication 18, dans lequel ledit moyen de conversion de fréquence comprend un oscillateur paramétrique optique (OPO), un doubleur de fréquence, un mélangeur de fréquence par addition, un générateur paramétrique optique (OPG) et/ou un amplificateur paramétrique optique (OPA).

**20.** Appareil selon la revendication 19, dans lequel ledit moyen de conversion de fréquence comprend un oscillateur paramétrique optique (OPO) à pompage synchrone et un doubleur de fréquence, un mélangeur de fréquence par addition, un générateur paramétrique optique (OPG) et un amplificateur paramétrique optique (OPA) pour créer une lumière pulsée rouge, verte ou bleue.

**21.** Appareil selon l'une quelconque des revendications 18 à 20, dans lequel ledit moyen de conversion de fréquence optiquement non linéaire comprend un cristal optiquement non linéaire (9) dont les axes principaux sont définis, ledit appareil comprend en outre un moyen pour ajuster l'angle de propagation dudit rayonnement laser dans ledit cristal par rapport auxdits axes principaux de manière à obtenir une mise en correspondance des phases dans l'opération de conversion non linéaire.

**22.** Procédé de production d'un rayonnement laser pulsé, ledit procédé comprenant les étapes qui consistent à :

exciter un milieu solide amplificateur laser (2) de telle sorte qu'il émette un rayonnement électromagnétique, ledit milieu amplificateur laser présentant deux surfaces d'extrémité (21, 22) et présentant la forme d'une mince plaque ou d'une mince couche dotée de deux surfaces d'extrémité, l'extension desdites surfaces d'extrémité étant supérieure à l'épaisseur de ladite plaque ou de ladite couche mesurée essentiellement dans une direction perpendiculaire à l'une desdites surfaces d'extrémité, au moins l'une desdites surfaces d'extrémité comprenant une surface de refroidissement,
refroidir ledit milieu amplificateur laser à l'aide de ladite surface d'extrémité,
faire circuler ledit rayonnement électromagnétique dans une cavité optique et
verrouiller passivement en mode ledit rayonnement électromagnétique en utilisant un absorbeur saturable.

**23.** Procédé selon la revendication 22, dans lequel on utilise en outre un verrouillage de mode à lentille de Kerr pour renforcer l'effet de verrouillage de mode.

**24.** Procédé selon les revendications 22 ou 23, dans lequel une dispersion négative est introduite à l'intérieur de ladite cavité optique.

**25.** Procédé selon l'une quelconque des revendications 22 à 24, dans lequel ledit rayonnement électromagnétique pulsé est émis à une cadence de répétition inférieure à 100 MHz et de préférence inférieure à 50 MHz.

**26.** Procédé selon l'une quelconque des revendications 22 à 25, dans lequel ledit milieu amplificateur laser est excité par un rayonnement électromagnétique.

**27.** Procédé selon l'une quelconque des revendications 22 à 26, dans lequel ledit rayonnement électromagnétique est extrait de ladite cavité optique.

**28.** Procédé selon l'une quelconque des revendications 22 à 27, dans lequel l'épaisseur du milieu amplificateur (2) est sélectionnée de telle sorte que l'effet du brûlage spatial des trous assiste la création de courtes impulsions.

**29.** Procédé selon l'une quelconque des revendications 22 à 28, dans lequel ledit rayonnement électromagnétique émis vient frapper ledit milieu amplificateur en disque mince deux fois pendant chaque recirculation dans ladite cavité optique.

**30.** Procédé selon l'une quelconque z Mmdes revendications 22 à 28, dans lequel ledit rayonnement électromagnétique émis vient frapper ledit milieu amplificateur en disque mince plus de deux fois pendant chaque recirculation dans ladite cavité optique, de telle sorte qu'au moins deux frappes sous différents angles d'incidence aient lieu de manière à effacer au moins en partie un motif d'onde stationnaire dans ledit milieu amplificateur en disque mince.

**31.** Procédé selon l'une quelconque des revendications 22 à 30, dans lequel ledit rayonnement électromagnétique dans ladite cavité optique est verrouillé en mode par commutation Q de préférence en utilisant un absorbeur saturable qui présente une grande profondeur de modulation.

**32.** Procédé de création d'un rayonnement électromagnétique pulsé, ledit procédé comprenant les étapes qui consistent à créer un rayonnement laser pulsé selon l'une quelconque des revendications 22 à 31 et en outre à convertir optiquement de manière non linéaire la fréquence dudit rayonnement laser.

**33.** Procédé selon la revendication 32, dans lequel la fréquence dudit rayonnement laser est convertie par un oscillateur paramétrique optique (OPO), un doubleur de fréquence, un mélangeur de fréquence par addition, un générateur paramétrique optique (OPG) et/ou un amplificateur paramétrique optique (OPA).

**34.** Procédé selon la revendication 33, dans lequel ledit rayonnement laser est converti par un oscillateur paramétrique optique (OPO) et un doubleur de fréquence, un mélangeur de fréquence par addition, un générateur paramétrique optique (OPG) et un amplificateur paramétrique optique (OPA) pour créer une lumière pulsée rouge, verte ou bleue.

**35.** Procédé selon l'une quelconque des revendications 32 à 34, dans lequel la fréquence est convertie dans un cristal optiquement non linéaire (9) dont les axes principaux sont définis, ledit appareil comprend en outre un moyen pour ajuster l'angle de propagation dudit rayonnement laser dans ledit cristal par rapport auxdits axes principaux de manière à obtenir une mise en correspondance des phases dans l'opération de conversion non linéaire.

**36.** Procédé de modification par un facteur d'échelle défini de la puissance de sortie du rayonnement électromagnétique pulsé créé par le procédé selon l'une quelconque des revendication 22 à 35, lequel procédé comprenant les étapes qui consistent à :

modifier essentiellement dudit facteur d'échelle la puissance émise par ledit moyen d'excitation,
modifier essentiellement par ledit facteur d'échelle la superficie éclairée par ledit rayonnement électromagnétique dans ledit milieu amplificateur laser et
modifier essentiellement dudit facteur d'échelle la superficie éclairée par ledit rayonnement électromagnétique sur ledit moyen de verrouillage de mode.

Fig. 1

EP 1 236 249 B1

Fig. 2

18

Fig. 3

Fig. 4

Fig. 5

Fig. 6

EP 1 236 249 B1

Fig. 7

Fig. 8